# FASCICULE DE BREVET EUROPEEN

(11) **EP 1 032 505 B1**
(45) Date de publication et mention de la délivrance du brevet: **22.10.2003**
(21) Numéro de dépôt: 99946250.0
(22) Date de dépôt: 28.09.1999
(51) Int. Cl.: B60K 11/04

(54) **DISPOSITIF DE MONTAGE DIRECT D'UN EQUIPEMENT, NOTAMMENT D'UN ECHANGEUR DE CHALEUR, SUR UN ELEMENT DE STRUCTURE DE VEHICULE AUTOMOBILE**
VORRICHTUNG ZUR DIREKTEN ANBRINGUNG EINES GERÄTES, INSBESONDERE EINES WÄRMETAUSCHERS, AN EINEM STRUKTURELEMENT EINES KRAFTFAHRZEUGES
DEVICE FOR DIRECTLY MOUNTING AN EQUIPMENT, IN PARTICULAR A HEAT EXCHANGER, ON A MOTOR VEHICLE STRUCTURAL ELEMENT

(30) Priorité: 30.09.1998 FR 9812233
(43) Date de publication de la demande: 06.09.2000
(73) Titulaire: VALEO THERMIQUE MOTEUR, 78321 La Verrière (FR); VALEO VISION, 93000 Bobigny (FR)
(72) Inventeur: GUYOMARD, Jean-Nicolas, F-27930 Le Mesnil Fuguet (FR); NATY, Jean-Claude, F-95100 Argenteuil (FR); SIGONNEAU, Jacques, F-28170 Theuvy Achères (FR)
(74) Mandataire: Lemaire, Marc
(86) Numéro de dépôt international: FR9902302
(87) Numéro de publication internationale: WO00018605

(56) Documents cités:
- EP-A- 0 843 146
- DE-A- 2 137 121
- DE-A- 19 524 668
- US-A- 4 651 839

## Description

L'invention concerne le montage des équipements de véhicule automobile sur une partie de ce véhicule.

Elle concerne tout particulièrement le montage des échangeurs de chaleur, par exemple le radiateur du circuit de refroidissement du moteur, ou encore le radiateur de chauffage de l'habitacle ou le condenseur du circuit de climatisation.

Elle s'applique tout particulièrement - mais de façon non limitative - au montage de ces équipements sur une face avant de véhicule, notamment réalisée sous forme d'un module unitaire pourvu de divers équipements, préparés et livrés par l'équipementier, prêts à être montés sur le véhicule par le constructeur.

Jusqu'à présent, l'échangeur de chaleur est fixé sur l'élément de structure du véhicule par l'intermédiaire de ressorts métalliques fixés en zone supérieure de l'élément de structure, d'une part, et de plots élastiques d'amortissement en partie inférieure, d'autre part.

Les ressorts permettent de rattraper les diverses tolérances dimensionnelles et autorisent le montage de différents types de radiateurs grâce à leur flexibilité. Quant aux plots, ils assurent l'amortissement et le centrage sur le support.

Il est également connu du document DE 41 37 038 des dispositifs selon le préambule de la revendication 1.

Toutefois, ces techniques de montage nécessitent la mise en place d'éléments rapportés (ressorts et pions de fixation) impliquant un surcoût du fait de la nécessité de prévoir des pièces supplémentaires et du temps nécessaire à leur montage dans le processus d'assemblage.

L'un des buts de l'invention est de remédier à cette difficulté, en proposant une nouvelle configuration de montage permettant de réduire le nombre de pièces nécessaires à l'assemblage, d'assurer un montage rapide et de conserver une flexibilité suffisante pour accepter plusieurs types d'équipements différents.

A cet effet, l'invention propose un dispositif de montage selon la revendication 1.

En particulier, la boîte à fluide peut être conformée de manière à présenter un évidement tourné vers le support et coopérant avec un doigt homologue porté par ce support et reçu par l'évidement ou, inversement, de manière à présenter un pion tourné vers le support et coopérant avec une ouverture homologue formée sur ce support et recevant le pion.

L'évidement ou le pion de la boîte à fluide peuvent être situés à l'endroit d'une contre-courbure formée soit aux extrémités, soit au sommet de la boîte à fluide.

Avantageusement, cette contre-courbure est adjacente à une courbure principale, de manière à former une inversion de courbure. Cette courbure principale peut comporter au moins un arc de courbure venant rejoindre la contre-courbure.

L'invention s'applique très avantageusement au cas où l'élément de structure du véhicule est un module de face avant.

Sous un autre aspect, l'invention concerne un élément de structure de véhicule automobile, comportant un dispositif de montage tel que défini précédemment.

D'autres caractéristiques de l'invention ressortiront de la description d'un exemple ci-dessous, faite en référence aux dessins annexés.

La figure 1 montre une première forme de réalisation du dispositif de montage de l'invention.

La figure 2 montre une deuxième forme de réalisation du dispositif de montage de l'invention.

Les figures 3 et 4 illustrent deux configurations possibles de montage, à la verticale et à l'horizontale, d'un échangeur de chaleur de véhicule.

Sur les figures, la référence 10 désigne de façon générale un échangeur thermique de véhicule automobile, par exemple (mais de façon non limitative) un radiateur de refroidissement du moteur. Un tel échangeur est constitué d'un faisceau de tubes 12 réalisant l'échange thermique avec le milieu extérieur. Les tubes du faisceau sont reliés de part et d'autre par deux blocs d'extrémité définissant le sens de circulation du fluide dans les tubes et permettant d'introduire le fluide dans l'échangeur et de l'en extraire.

Chacun des blocs d'extrémité comporte une plaque collectrice dans laquelle débouchent les tubes du faisceau et à laquelle est associée un capot de fermeture ou "boîte à fluide" 14, reliée de manière étanche ou collecteur de manière à former un volume commun en communication de fluide avec les tubes du faisceau.

L'invention propose d'intégrer à la boîte à fluide du radiateur les fonctions de fixation et d'amortissement autrefois dévolues à des ressorts et des pions rapportés sur l'élément de structure supportant le radiateur.

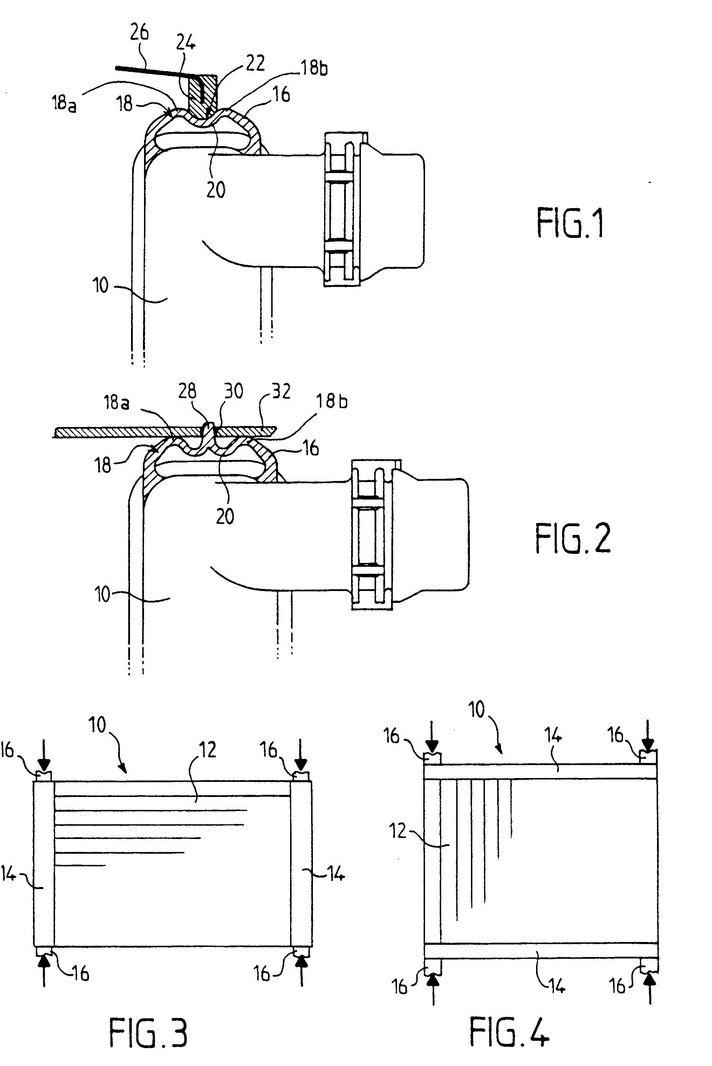

A cet effet, la boîte à fluide 14 comporte à ses extrémités des régions 16 configurées de la manière illustrée plus en détail figure 1 ou figure 2.

Dans le cas d'un radiateur à tubes horizontaux et boîtes à fluide verticales (figure 3), les régions 16 sont situées en bout de chacune des boîtes à fluide 14. En revanche, dans le cas d'une configuration à tubes verticaux et boîtes à fluide horizontales (figure 4), les régions 16 sont situées non plus en bout de chaque boîte à fluide, mais au sommet des régions d'extrémité de ces dernières (sur les figures 3 et 4, les flèches indiquent les points de fixation à l'élément de structure du véhicule).

La configuration de montage selon l'invention peut prendre l'une ou l'autre des formes illustrées figure 1 et 2, ces deux formes de montage pouvant être combinées, par exemple celle de la figure 1 en partie supérieure et celle de la figure 2 en partie inférieure, ou inversement.

Dans le cas de la figure 1, la région 16 de la boîte à eau est conformée de manière à présenter une inversion de courbure, avec une courbure principale 18 et une contre-courbure 20, afin de lui donner en section une forme dite de "lyre", présentant structurellement une élasticité propre. La courbure principale 18 comporte deux arcs de courbure 18a et 18b de part et d'autre de la contre-courbure 20. La contre-courbure 20 forme un évidement 22 recevant un doigt homologue 24 solidaire d'un élément 26 du support de face avant.

Dans la mise en oeuvre de la figure 2, la contre-courbure 20 de la lyre porte un pion 28 destiné à s'engager dans une ouverture homologue 30 d'un élément 32 du support de face avant.

Aussi bien dans le cas de la figure 1 que celui de la figure 2, il peut être prévu que la courbure principale 18 ne comporte qu'un seul arc de courbure 18a ou 18b venant rejoindre la contre-courbure 20.

Comme on le constate aisément, dans l'un ou l'autre cas, la configuration particulière de la lyre formée sur la boîte à fluide du radiateur, avec l'évidement 20 ou le pion 28, permet un montage très aisé par simple clipsage sur le support de face avant, ceci avec centrage immédiat du radiateur sur le support et tout en conservant l'amortissement souhaité du fait de l'élasticité de la lyre 18.

## Revendications

1. Dispositif de montage d'un échangeur de chaleur de véhicule automobile du type comprenant un faisceau de tubes (12) sur un élément de structure de ce véhicule automobile formant support pour cet échangeur de chaleur, dispositif dans lequel l'échangeur de chaleur (10) et le support (26, 32) sont réunis en au moins un point par deux éléments coopérants homologues, et dans lequel l'élément coopérant (18) de l'échangeur de chaleur est élastiquement déformable en éloignement et en rapprochement du support, permettant par emboîtement direct audit point le montage avec amortissement de l'échangeur de chaleur sur le support,
**caractérisé en ce que** les tubes (12) sont réunis à chacune de leurs extrémités opposées par une plaque collectrice fermée par une boîte à fluide (14) et **en ce que** ledit élément coopérant (18) de l'échangeur de chaleur est une conformation de la boîte à fluide.

2. Dispositif selon la revendication 1, **caractérisé en ce que** la boîte à fluide est conformée de manière à présenter un évidement (22) tourné vers le support et coopérant avec un doigt (24) homologue porté par ce support et reçu par l'évidement.

3. Dispositif selon la revendication 1, **caractérisé en ce que** la boîte à fluide est conformée de manière à présenter un pion (28) tourné vers le support et coopérant avec une ouverture (30) homologue formée sur ce support et recevant le pion.

4. Dispositif selon la revendication 2 ou 3, **caractérisé en ce que** l'évidement ou le pion de la boîte à fluide sont situés à l'endroit d'une contre-courbure (20) formée aux extrémités de la boîte à fluide.

5. Dispositif selon la revendication 2 ou 3, **caractérisé en ce que** l'évidement ou le pion de la boîte à fluide sont situés à l'endroit d'une contre-courbure (20) formée au sommet de la boîte à fluide.

6. Dispositif selon l'une des revendications 4 et 5, **caractérisé en ce que** la contre-courbure (20) est adjacente à une courbure principale (18) de manière à former une inversion de courbure.

7. Dispositif selon la revendication 6, **caractérisé en ce que** la courbure principale (18) comporte au moins un arc de courbure (18a, 18b) venant rejoindre la contre-courbure (20).

8. Dispositif selon l'une des revendications 1 à 7, **caractérisé en ce que** l'élément de structure du véhicule est un module de face avant.

9. Ensemble constitué d'un élément de structure et d'un échangeur de chaleur de véhicule automobile, **caractérisé en ce qu'**il comporte un dispositif de montage selon l'une des revendications 1 à 8.

## Patentansprüche

1. Vorrichtung zur Montage eines Wärmeaustauschers für ein Kraftfahrzeug des Typs, der ein Rohrbündel (12) an einem Strukturelement dieses Kraftfahrzeugs umfasst, das eine Halterung für diesen Wärmeaustauscher formt, wobei in dieser Vorrichtung der Wärmeaustauscher (10) und die Halterung (26, 32) an mindestens einem Punkt durch zwei zusammenwirkende, sich entsprechende Elemente miteinander verbunden sind, und wobei das zusammenwirkende Element (18) des Wärmeaustauschers durch elastische Verformung von der Halterung entfernt und zu dieser hin bewegt werden kann, wodurch es durch direkten Eingriff an diesem Befestigungspunkt die Montage und Federung des Wärmeaustauschers auf der Halterung erlaubt,
**dadurch gekennzeichnet, dass** die Rohre (12) an jedem ihrer entgegengesetzten Seiten durch eine Sammelplatte verbunden sind, die durch einen Fluidkasten (14) geschlossen wird, und dass dieses zusammenwirkende Element (18) des Wärmeaustauschers eine Körperform des Fluidkastens ist.

2. Vorrichtung nach Anspruch 1, **dadurch gekennzeichnet, dass** der Fluidkasten so ausgebildet ist, dass er eine Aussparung (22) aufweist, die der Halterung zugewandt ist und mit einem entsprechenden Finger (24) zusammenwirkt, der von dieser Halterung getragen wird und von der Aussparung aufgenommen wird.

3. Vorrichtung nach Anspruch 1, **dadurch gekennzeichnet, dass** der Fluidkasten so ausgebildet ist, dass er einen Zapfen (28) aufweist, der der Halterung zugewandt ist und mit einer entsprechenden Öffnung (30) zusammenwirkt, der auf dieser Halterung geformt ist und den Zapfen aufnimmt.

4. Vorrichtung nach Anspruch 2 oder 3, **dadurch gekennzeichnet, dass** die Aussparung oder der Zapfen des Fluidkastens einer Gegenkrümmung (20) gegenüber angeordnet ist, die an den Enden des Fluidkastens geformt ist.

5. Vorrichtung nach Anspruch 2 oder 3, **dadurch gekennzeichnet, dass** die Aussparung oder der Zapfen des Fluidkastens einer Gegenkrümmung (20) gegenüber angeordnet ist, die an der Oberseite des Fluidkastens geformt ist.

6. Vorrichtung nach einem der Ansprüche 4 und 5, **dadurch gekennzeichnet, dass** die Gegenkrümmung (20) zu einer Hauptkrümmung (18) benachbart ist, so dass eine Krümmungsumkehrung geformt wird.

7. Vorrichtung nach Anspruch 6, **dadurch gekennzeichnet, dass** die Hauptkrümmung (18) mindestens einen Krümmungsbogen (18a, 18b) aufweist, der die Gegenkrümmung (20) erreicht.

8. Vorrichtung nach einem der Ansprüche 1 bis 7, **dadurch gekennzeichnet, dass** das Strukturelement des Kraftfahrzeug ein Frontmodul ist.

9. Baugruppe, bestehend aus einem Strukturelement und einem Wärmeaustauscher eines Kraftfahrzeuges, **dadurch gekennzeichnet, dass** sie eine Montagevorrichtung nach einem der Ansprüche 1 bis 8 umfasst.

## Claims

1. Device for mounting a motor vehicle heat exchanger of the type comprising a bundle of tubes (12) on a structural element of this motor vehicle forming a support for this heat exchanger, in which device the heat exchanger (10) and the support (26, 32) are joined together at least at one point by two homologous collaborating elements, and in which the collaborating element (18) belonging to the heat exchanger is elastically deformable away from and towards the support, allowing the heat exchanger to be mounted with damping on the support by direct interlocking at the said point, **characterized in that** the tubes (12) are connected at each of their opposite ends by a manifold plate closed by a header box (14) and **in that** the said collaborating element (18) belonging to the heat exchanger is a shaping of the header box.

2. Device according to Claim 1, **characterized in that** the header box is shaped in such a way as to exhibit a recess (22) facing towards the support and collaborating with a finger (24) that is its homologue borne by this support and housed in the recess.

3. Device according to Claim 1, **characterized in that** the header box is shaped in such a way as to exhibit a peg (28) facing towards the support and collaborating with an aperture that is its homologue formed on this support and housing the peg.

4. Device according to Claim 2 or 3, **characterized in that** the recess or the peg of the header box is situated at the site of an inverse curvature (20) formed at the ends of the header box.

5. Device according to Claim 2 or 3, **characterized in that** the recess or the peg of the header box is situated at the site of an inverse curvature (20) formed at the top of the header box.

6. Device according to either of Claims 4 and 5, **characterized in that** the inverse curvature (20) is adjacent to a main curvature (18) so as to reverse the curvature.

7. Device according to Claim 6, **characterized in that** the main curvature (18) has at least one curved arc (18a, 18b) meeting the inverse curvature (20).

8. Device according to one of Claims 1 to 7, **characterized in that** the structural element of the vehicle is a front end module.

9. Assembly consisting of a motor vehicle heat exchanger and a structural element, **characterized in that** it comprises a mounting device according to one of Claims 1 to 8.
